# EUROPEAN PATENT SPECIFICATION

(11) **EP 0 318 957 B1**
(45) Date of publication and mention of the grant of the patent: **16.08.1995**
(21) Application number: 88119983.0
(22) Date of filing: 30.11.1988
(51) Int. Cl.: G06F 7/60, G06F 7/52

(54) **Population counting in computer systems**
Populationszählung in Rechnersystemen
Comptage d'une population dans les systèmes ordinateurs

(30) Priority: 30.11.1987 JP 302463/87; 20.01.1988 JP 10091/88
(43) Date of publication of application: 07.06.1989
(73) Proprietor: FUJITSU LIMITED, Kawasaki-shi, Kanagawa 211 (JP)
(72) Inventor: Kuroda, Koji Fujitsu Limited, Kawasaki-shi Kanagawa 211 (JP); Nakatani, Shoji Fujitsu Limited, Kawasaki-shi Kanagawa 211 (JP)
(74) Representative: Sunderland, James Harry

(56) References cited:
- US-A- 4 189 716
- PATENT ABSTRACTS OF JAPAN vol. 12, no. 71 (P-673) p. 2 P 673 & JP-A-62 209 621

## Description

The present invention relates to population counting in computer systems.

With the development of computer systems data processing performed in computer systems has come to be executed at high speed. In the field of graphic display for example, the variable density of a graph has come to be processed rapidly by computer systems. That is, variable density is processed at high speed in a computer system by counting the number of "1" bits in numerical data, represented in binary notation, including graphic information. Such counting of the number of "1" bits is called "population counting" and an instruction to carry out such counting is called a "population counting instruction". The present invention relates to the execution of population counting in computer systems.

Population counting has been performed by a circuit provided in a computer system exclusively for the purpose. With such a dedicated population counting circuit, the number of "1" bits in numerical data, the data usually consisting of 8 bytes, can be counted. However, the counting is performed one byte at a time, so that it takes a lot of time to count up the "1" bits throughout the numerical data. Considering only the desirability of increased counting speed, the provision of a dedicated counting circuit which could perform counting two or more bytes at a time instead of one byte at a time might be contemplated. However, this is not practically realizable because a large amount of hardware (electric parts) would be needed for such a dedicated circuit. Thus, the use of a dedicated circuit has the drawbacks of increased cost (for the circuit) and of low speed (i.e. considerable time is needed).

In computer systems, particularly in recent high-speed computer systems such as so-called super computers, multiplying units can perform multiplication at high speed, handling data in units of more than two bytes, using carry save adders (CSA) and carry propagate adders (CPA), which are adders well-known for use in multiplying units in computer systems. Accordingly, if a multiplying unit could be used to perform population counting, the counting speed of population counting could be increased, without the need to provide a dedicated population counting circuit. Furthermore, in a computer system, the multiplying unit is generally not so often used and, moreover, population counting is not often performed. Accordingly, it can be said that the use of a multiplying unit for population counting would contribute to increase the effectiveness of usage of the multiplying unit, rather than disturbing the operation of the computer system.

The use of a multiplying unit for population counting has been attempted by Shoji Nakatani, one of the inventors of the present invention. This attempt led to a proposal described in a laid-open Japanese Patent Application SHOH 62-209621 (September 14, 1987). However, in SHOH 62-209621, the multiplying unit used includes only one multiplying circuit with a spill adder. Therefore, when the multiplier of multiplication data is divided into a plurality of elements, the multiplication must be repeated in the multiplying circuit a number of times equal to the number of the elements. For example, when the multiplier consists of 8 bytes and is divided into 4 elements, multiplication must be carried out or repeated four times (in this case, the multiplicand of the multiplying data is not divided). Furthermore, the spill adder is needed for compensating lower digits which appear during repetition of the multiplication, so as to be carried up to the final multiplication results.

Generally, there are two types of multiplying unit. For the first type of multiplying unit size is considered more important than counting speed, so that a first-type multiplying unit usually includes only one multiplying circuit. The multiplying unit in SHOH 62-209621 is of this first type. For the second type of multiplying unit counting speed is considered more important than size, so that the second-type multiplying unit includes a plurality of multiplying circuits (sub-units) operating in parallel. The proposal of SHOH 62-209621 cannot be applied to the second type of multiplier.

According to the present invention there is provided a multiplying unit provided in a computer system, for performing multiplication of multiplicand data and multiplier data in a multiplication mode and for performing population counting of population counting input data in a population counting mode, the multiplying unit comprising:
means for registering the multiplicand data in the multiplication mode;
means for registering and equally dividing the multiplier data into a plurality of multiplier elements in the multiplication mode, and for registering and equally dividing the population counting data into a plurality of population counting elements, of the same number as the multiplier elements, in the population counting mode;
a plurality of multiplying sub-units for executing simultaneously partial multiplications among the multiplicand and the multiplier elements, producing partial product data of the partial multiplications in the multiplication mode, and for executing simultaneously partial population countings for the population counting elements, producing partial counted data of the partial population countings in the population counting mode, of which multiplying sub-units a plurality, equal in number to the population counting elements, comprise first type multiplying sub-units, each said first type multiplying sub-unit comprising:
a first sub-unit register for setting one of the multiplier elements in the multiplication mode, and for setting one of the population counting elements in the population counting mode;
a second carry save adder for counting the number of "1" data bits in the population counting element registered in said first sub-unit register, simultaneously inputting every two data signals of the population counting element, said two data signals being what have been registered respectively in two registering positions adjacent each other, of said first sub-unit register, and outputting elemental sum and carry data of the population counting element;
a second sub-unit register for setting and outputting the multiplicand data in the multiplication mode, and for generating and outputting all "0" data bits in the population counting mode;
a decoder for outputting decoded signals required for multiplying the multiplicand data and the multiplier element, inputting the multiplier element from said first sub-unit register in the multiplication mode, and for generating and outputting all "0" data bits in the population counting mode;
a multiple generator for generating and outputting shifted data by combining the multiplicand data from said second sub-unit register and the decoded signals from said decoder in the multiplication mode, and for generating-and outputting all "0" data bits in the population counting mode;
a pair of a first carry save adder and a first carry propagate adder for outputting the partial product data of the partial multiplication of the multiplicand data and the multiplier element, adding the shifted data from said multiple generator in the multiplication mode, and for outputting the partial counted data of the number of "1" data bits in the population counting element, adding the elemental sum and carry data from said second carry save adder in the population counting mode; and
selector means for selecting the shifted data from said multiple generator and the elemental sum and carry data from said second carry save adder so as to send either of said data to said pair of a first carry save adder and a first carry propagate adder in accordance with the multiplication mode and the population counting mode respectively;
and the multiplying unit also comprising:
means for adding said partial product data from said multiplying sub-units, outputting a multiplication result of the multiplicand data and the multiplier data in the multiplication mode, and for adding said partial counted data of the partial population countings from said multiplying sub-units, outputting a population counting result of the population counting input data in the population counting mode.

In a multiplying unit according to the present invention, the multiplicand data may be equally divided into a plurality of multiplicand elements in the multiplication mode.

An embodiment of the present invention can provide for an increase in the speed of execution of a population counting instruction given to a computer system including a multiplying unit of the second type (with multiplying sub-units).

An embodiment of the present invention can provide for a decrease in the quantity of (dedicated) electrical parts provided for executing a population counting instruction in a computer system.

An embodiment of the present invention can provide for the performance of population counting with less expense on computer system fabrication costs.

In an embodiment of the present invention a multiplying unit of the second type, including a plurality of multiplying sub-units, is used. Use is made of CSAs and CPAs provided in the multiplying sub-units, adding only a small amount of hardware (electrical parts) such as an adder, selectors and a few logical circuit elements to each multiplying sub-unit.

When multiplication is performed in a multiplying unit it is usually for the purpose of executing a program in the computer system. This operating state or mode will be called a "regular multiplication mode" hereinafter. However, in accordance with an embodiment of the present invention, the computer system is modified so that the multiplying unit can operate both for regular multiplication and for population counting. This latter operating state or mode of the multiplying unit will be called a "population counting mode" hereinafter.

In the population counting mode, numerical data for population counting is set in a multiplier register in the second-type multiplying unit and divided into a plurality of elements. The division of the multiplier is performed based on the process used in the regular multiplication mode; that is, the division is performed in consideration of the calculating form executed in the regular multiplication mode and the number of the multiplying sub-units provided in the second-type multiplying unit. The calculating form is a form for multiplying multiplicand and multiplier given to the multiplying unit. Generally, in a second-type multiplying unit, there are several calculating forms. For example, according to some calculating forms, multiplication is performed by multiplying together elements obtained by dividing the multiplicand and the multiplier, and according to another calculating form, the multiplication is performed by multiplying the multiplicand, which is not divided, together with elements obtained by dividing the multiplier.

After the numerical data for population counting is divided into a plurality of elements in the multiplier register, the bytes of each element are sent to the respective multiplying sub-unit, and the number of "1" bits in each element is counted by a CSA newly provided for the respective multiplying sub-unit for performing population counting, and a half-sum output (HS) and a half-carry output (HC) concerning to the number of bits "1" in each element are produced from the newly provided CSA. The HS and HC outputs are sent to a CSA and a CPA which have been (are ordinarily) provided in each multiplying sub-unit and added thereby, using the well-known Booth's algorithm.

The counted results of the numbers of "1" bits in respective elements are sent from the multiplying sub-units to a common CSA and a common CPA which also have been (are ordinarily) provided in the second-type multiplying unit, in which the counted results from the multiplying sub-units are added and the final results of the population counting output from the common CPA.

In an embodiment of the present invention, since the hardware and the multiplying algorithm of the multiplying sub-units in the second-type multiplying unit can be used effectively in parallel, population counting can be performed at high speed, using less hardware.

Reference is made, by way of example, to the accompanying drawings, in which:-
Fig. 1 is a block diagram of a population counting circuit of the prior art provided in a computer system;
Fig. 2 illustrates 8-byte input and output data relating to a population counting instruction;
Fig. 3 is a circuit diagram of a population counting circuit of the prior art;
Fig. 4 is a block diagram of a first embodiment of the present invention;
Fig. 5 is a circuit diagram illustrating a population counting mode of the first embodiment;
Fig. 6 is a circuit diagram of a first selector and a part of a multiple generator;
Fig. 7 is a circuit diagram of a second selector and a part of a multiple generator;
Fig. 8 is a schematic chart illustrating a method of addition for population counting in a sub-unit;
Fig. 9 is a schematic chart illustrating a method of addition of the number of "1" outputs from the four multiplying units in the first embodiment;
Fig. 10 is a block diagram of a second embodiment of the present invention;
Fig. 11 is a schematic chart illustrating a method of addition in a sub-unit to obtain a full sum and full carry; and
Fig 12 is a schematic chart illustrating a method of addition of the number of "1"s output from the four multiplying units in the second embodiment.

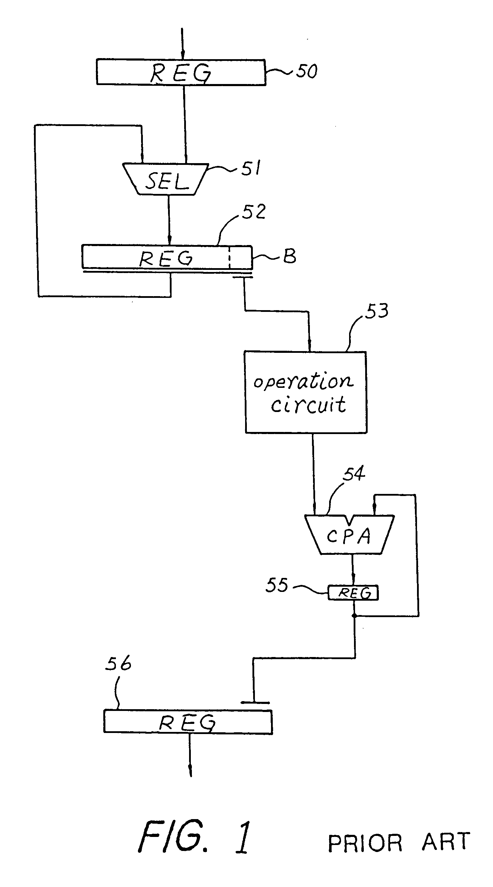

Before describing embodiments of the present invention, a prior art dedicated population counting circuit and a prior art proposal for a first-type multiplying unit capable of performing population counting will be briefly explained with reference to Figs. 1 to 3.

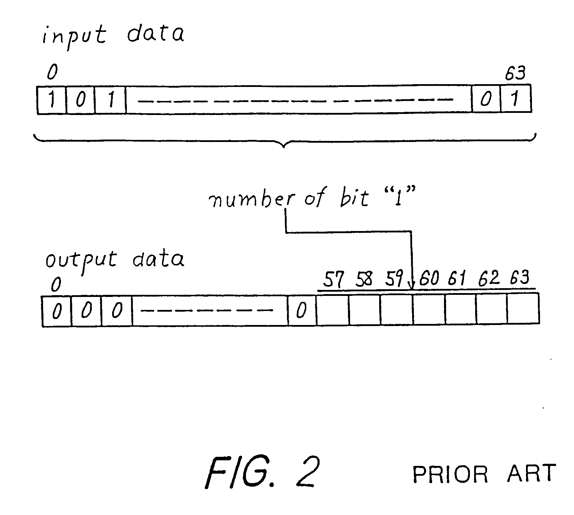

Fig. 1 is a block diagram of a dedicated population counting circuit provided for a computer system. In the dedicated population counting circuit, population counting is performed as follows: numerical data (consisting of 8 bytes, in binary notation) for the population counting is given to a register (REG) 50; the 8-byte data is transferred to a further-register REG 52 through a selector 51, and a byte constituting the lowest units of the 8-byte data in the REG 52, which will be called the lowest byte in the REG 52 hereinafter, is sent to an operation circuit 53 in which the number of "1" bits is counted and converted to a binary numerical and sent to a CPA 54. In the CPA 54, the number of "1" bits in the lowest byte in the REG 52 is counted and stored in an intermediate register REG 55. During the above step, the 8-byte data in the REG 52 is shifted to the right so that the next-lowest byte, from the point of view of the lowest byte treated in the above step, is set at the lowest byte position. Then the number of "1" bits in this next-lowest byte is counted by the same process as indicated above and the counted result for this next-lowest byte is added to the counted result for the previous lowest byte. In the CPA 54, counting of the number of "1" bits in respective bytes is repeated for every byte and the counted results are added. The output from the CPA 54 is sent to a result register REG 56 from which the number of "1" bits in the 8-byte numerical data is output as shown in Fig. 2. Thus, in the prior art dedicated population counter circuit, the count of "1" bits has been performed by repeating eight times the process of counting the number of "1" bits in one byte. This results in considerable waste of time. The counting, theoretically, could be performed two or more bytes at a time, but in practice this is completely unrealistic from the viewpoint of hardware costs.

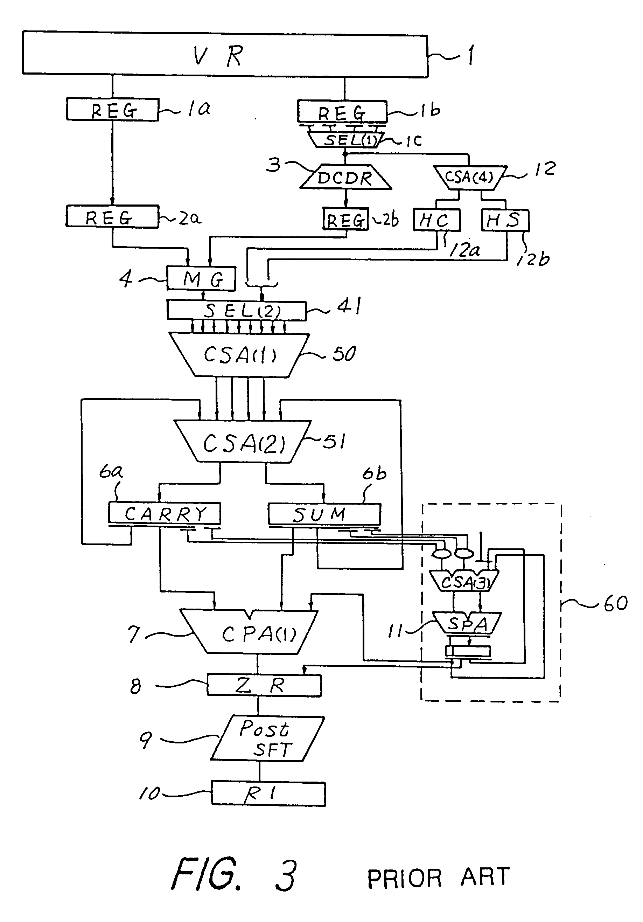

The use of a multiplying unit for population counting has been attempted in accordance with a proposal as shown in Fig. 3. However, in this proposal, the multiplying unit is a first-type multiplying unit including only one multiplying circuit with a spill adder, so that there is still a problem of poor counting speed as indicated below.

When the first-type multiplying unit shown in Fig. 3 operates in the regular multiplication mode, it operates as follows: multiplication data including the multiplicand and the multiplier each consisting of 8 binary notation bytes for example, is set in a vector register (VR) 1; the multiplicand in the VR 1 is transferred to a multiplicand register REG (CAND REG) 2a through a register REG 1a; the multiplier in the VR 1 is set to a register REG 1b and divided into four elements each consisting of 2 bytes (16 bits); each element of 2 bytes is set to a decoder (DCDR) 3 in which the element is decoded into nine kinds of shift control signals, based on the well-known Booth's algorithm, wherein the nine kinds of shift control signals will be called "decoded signals" hereinafter; the decoded signals from the DCDR 3 are set to a multiplier register REG 2b as the multiplier for the multiplicand set in the CAND REG 2a; the multiplicand in the CAND REG 2a and the decoded signals in the multiplier REG 2b are sent to a multiple generator (MG) 4 in which the multiplicand is shifted as far as indicated (as far as the numerals designated) by the decoded signals, this generation in the MG 4 being called multiple generation; the shifted multiplicands produced from the MG 4 are sent to a first CSA (CSA(1)) 50 and a second CSA (CSA(2)) 51 in which the shifted multiplicands are added, producing an intermediate sum and an intermediate carry of the products of the multiplicand and the relevant element of the multiplier at register REG 6a and 6b respectively; the above process is repeated four times for obtaining the products of the multiplicand and the four elements; the outputs of the REGs 6a and 6b are sent to a first CPA (CPA(1)) 7 in which the four results concerning the four elements are added, producing the total number of the "1" bits; and the total number, namely a multiplication result, is set in a result register REG (ZR) 8.

When the regular multiplication mode is changed to the population counting mode in the first-type multiplying unit shown in Fig. 3, the first-type multiplying unit performs population counting as follows: the numerical data (for example consisting of 8 binary notation bytes) for the population counting is set to the VR 1; the numerical data for the population counting is transferred to the REG 1b and divided into four elements each consisting of 2 bytes; each 2-byte element is selected from the lowest element by a first selector (SEL(1)) 1c, provided to the first-type multiplying unit, so that the lowest element is sent to a fourth CSA (CSA(4)) 12, provided to the first-type multiplying unit, in which the number of "1" bits in each element is counted, producing the half sum (HS) of "1" bits in the element and the half carry (HC) provided during processing to producing the HS, at an HS register REG 12b and an HC register REG 12a respectively; the HS and HC respectively set to the HS REG 12b and the HC REG 12a are sent to a second selector (SEL(2)) 41, newly provided in the first-type multiplying unit, in which the HS and HC are selected so as to be sent to the CSA(1) 50 and CSA(2) 51, suppressing the output of the MG 4 so that it is not sent to the CSA(1) 50; then the numbers of "1" bits in all four elements are added, using the hardware and the Booth's algorithm of the CSA(1) and the CSA(2) repeatedly, four times, and also using a spill adder (SPA) 11 for compensating raised carry in the low units omitted during the operation of the CSA (1) 50 and CSA(2)51; and the result of population counting of the given numeral data is output at the ZR 8.

As stated above, when the first-type multiplying unit is used for performing population counting, CSA(1) and CSA(2) are used, repeating their operation as many times as there are divided elements, which results in considerable wastage in counting up all "1" bits of the numerical data.

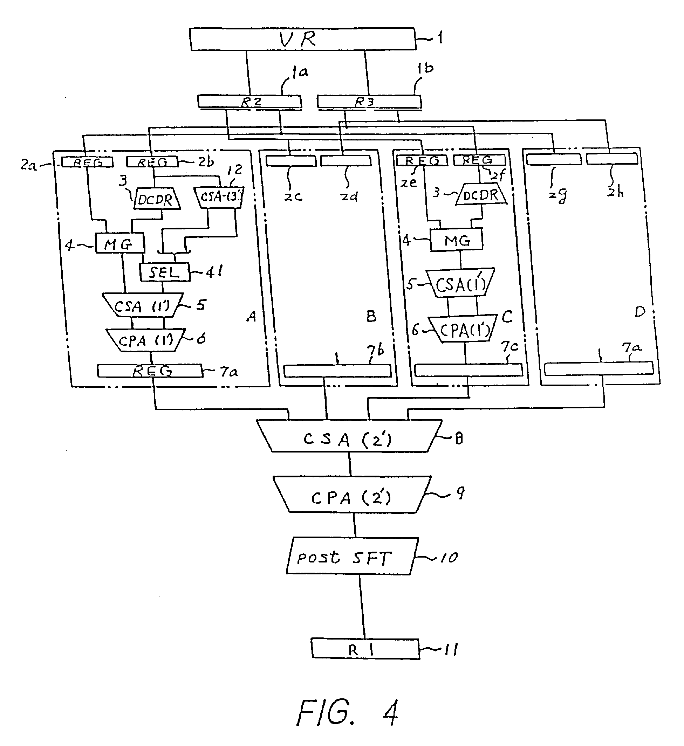

For exemplifying the present invention, first and second embodiments will be explained, using two kinds of second-type multiplying unit each including four multiplying sub-units, referring to Figs. 4 to 9 and Figs. 10 to 12 respectively. In each embodiment, the multiplicand and the multiplier consist of 8 bytes respectively.

In the first embodiment, the second-type multiplying unit operates, in the regular multiplication mode, under a calculating form such that the multiplicand and the multiplier are divided each into two elements, so that each element consists of 4 bytes. The multiplicand is divided into an upper multiplicand element (CU) and a lower multiplicand element (CL) and the multiplier is divided into an upper multiplier element (IU) and a lower multiplier element (IL). Then the regular multiplication is performed by multiplying the elements with each other like CU × IL, CL × IL, CU × IU, CL × IU, using the four multiplying sub-units respectively, and the multiplied results from the multiplying sub-units are added by a carry save adder (a second CSA (CSA(2′)) and a carry propagate adder (a second CPA (CPA(2′)).

Fig. 4 is a block diagram of a second multiplying unit as used in the first embodiment. In Fig. 4, the same reference symbols or numerals as in Fig. 3 designate the same or similar functions or parts as in Fig. 3. In Fig. 4, when the second-type multiplying unit operates in the regular multiplication mode, the multiplications of CL × IU, CU × IL, CU × IU and CL × IL are performed by a multiplying sub-unit A, which is simply called a "sub-unit A" hereinafter, a sub-unit B, a sub-unit C and a sub-unit D respectively. In the population counting mode, however, the sub-units A and B operate in the population counting mode and sub-units C and D operate in the regular multiplication mode. Therefore, only the internal block diagram forms of the multiplying circuits of sub-unit A and C are shown in Fig. 4, leaving other sub-units B and D blank except for registers at input and output of the sub-units.

Regular multiplication is performed as follows:
numerical data for performing the multiplication is set to VR 1; from VR 1, the 8-byte multiplicand and the 8-byte multiplier are sent to the multiplicand REG 1a and the multiplier REG 1b respectively; the multiplicand in the REG 1A is divided into CU data and CL data and the multiplier in the REG 1b is divided into IU data and IL data so that each element consists of 4 bytes; the CL data in the REG 1a and the IU data in the REG 1b are set to REG 2a and REG 2b in the sub-unit A respectively; in the sub-unit A, the IU data set in the REG 2b is sent to a decoder (DCDR) 3 in which the decoded signals obtained from the IU data are produced and sent to an MG 4; while, the CL data set in the REG 2a is also sent to the MG 4 in which the multiple generation is performed with the CL data and the decoded signals as to the IU data; the output data from the MG 4 is sent to a first CSA (CSA(1′)) 5 and a first CPA (CPA(1′)) 6, in which the output data from the MG 4 are added in accordance with Booth's algorithm, producing the partial product CL × IU at a result register REG 7a; in the sub-units B, C and D, similar operations to those performed in the sub-unit A are performed respectively, producing the partial products CU × IL, CU × IU and CL × IL respectively; these partial products are sent to a second CSA (CSA(2′)) 8 and a second CPA (CPA(2′)) 9 by which the final result of the regular multiplication is obtained; and the final result is output to a result REG 11 through a post shifter 10 for normalization. Thus, in the second multiplying unit, regular multiplication can be performed by making the four sub-units operate at the same time, which results in a shortening of operation time, compared with the operation time of the first-type multiplying unit.

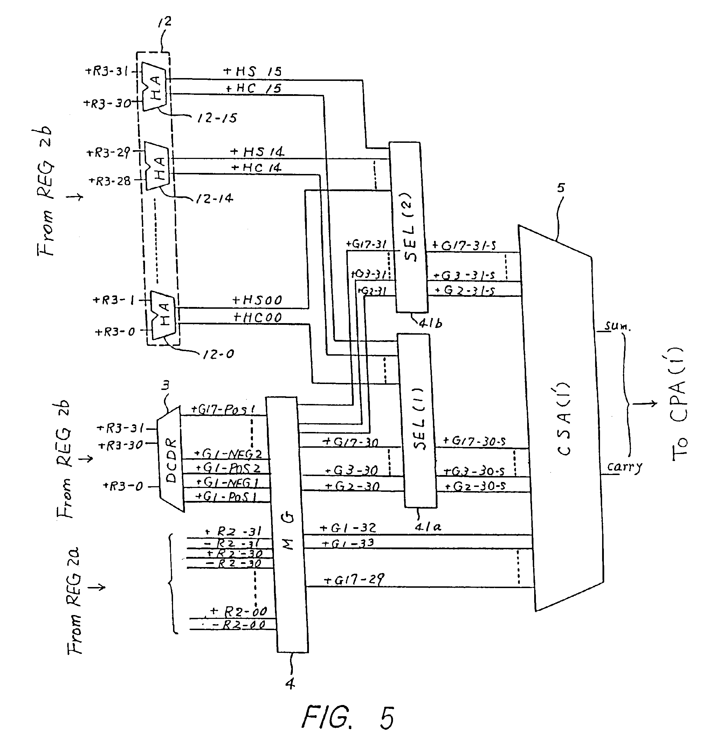

When population counting is performed using the second-type multiplying unit shown in Fig. 4, the mode of the second-type multiplying unit is changed to the population counting mode. In this mode the 8 byte numerical data for population counting, which will be called the "input 8-byte data" hereinafter, is given to the VR 1, and the input 8-byte data is set to the REG 1b in which the input 8-byte data is equally divided into two elements called IU data and IL data, each consisting of 4 bytes. The IU data is set to REGs 2b and 2f in the sub-units A and C respectively, and the IL data is set to the REGs 2d and 2h in the sub-units B and D respectively.
In the sub-unit A, the IU data is sent to a third CSA (CSA(3′)) 12 composed of sixteen half adders 12-0, 12-1, ---, 12-14 and 12-15, by which sixteen HC signals HC00, HC01, HC02, ---, HC14 and HC15 and sixteen HS signals HS00, HS01, HS02, ---, HS14 and HS15 are produced and sent to a selector 41 composed of a first selector (SEL(1)) 41a and a second selector (SEL(2)) 41b, as shown in Fig. 4 and in Fig. 5 in detail. The selected data from the selector 41 are sent to the CSA(1′) 5 having seventeen inputs and six steps of addition circuits. The output from the CSA(1′) 5 is sent to the CPA(1′) 6 in which a carry and a sum output from the CSA-(1′) 5 are added. The results of the addition obtained by the CPA(1′) are set in the REG 7a.

The REG 2a has a function of outputting multiplicand bit signals and inverted signals to the multiplicand bit signals in the regular multiplication mode. The output signals from the REG 2a are shown in Fig. 5, and in the output signals from the REG 2a, a plus signal such as +R2-31 indicates a regular bit signal at the 31st bit position of the REG 2a and a minus signal such as -R2-31 indicates the inverted signal to the bit signal +R2-31.

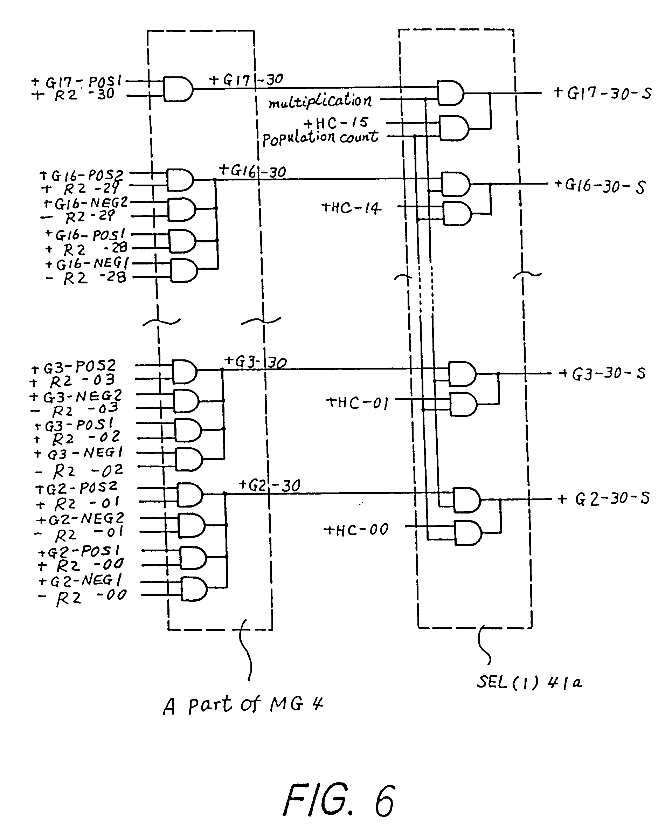

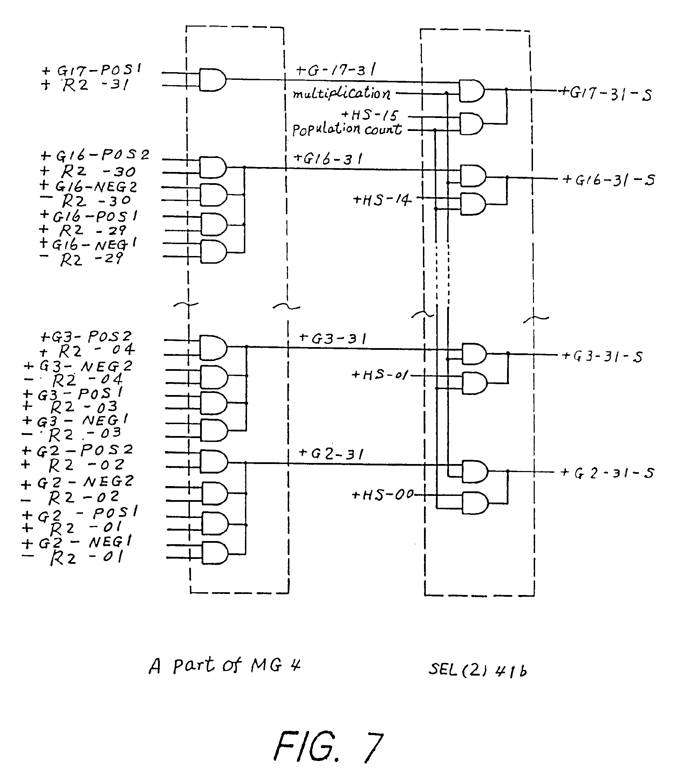

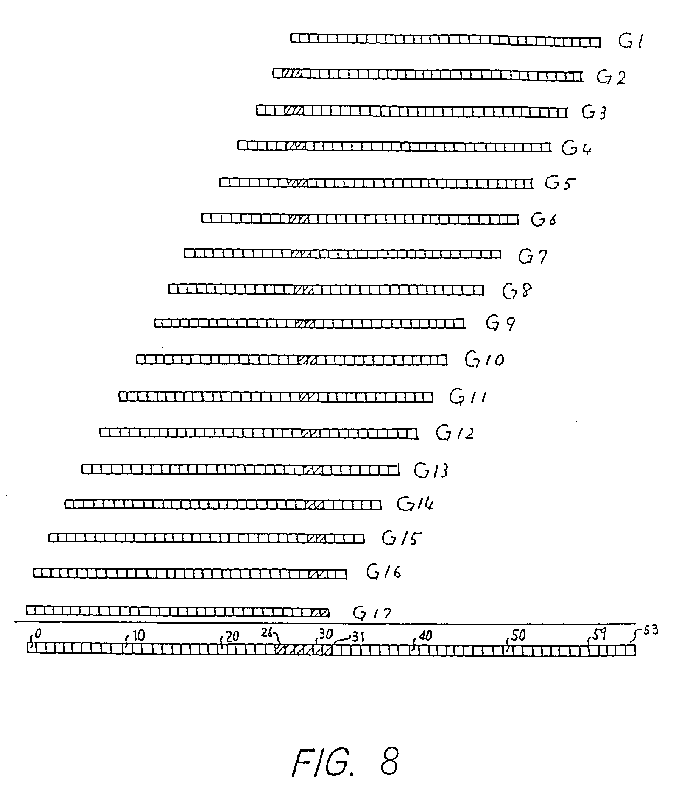

Fig. 5 is a circuit diagram showing the circuit connections among the CSA(3′) 12, the SEL(1) 41a, the SEL(2) 41b, the DCDR 3, the MG 4 and the CSA(1′) 5. In Fig. 5, the same reference symbols, or numbers, as in Fig. 4 designate the same or similar units or parts as in Fig. 4. The REG 2b, which is not depicted in Fig. 5, has 32 bit-positions for setting the 4-byte IU data, and the bit-signals set in the 32 bit-positions are indicated by +R3-0, +R3-1, +R3-2, ---, +R3-30 and +R3-31. In the population counting mode, the bit-signals +R3-0 to +R3-31 set in the REG 2b are sent to the CSA(3′) 12 including sixteen half adders (HAs) 12-0, 12-1, 12-2, ---, 12-14 and 12-15. Two bit-signals set in the bit-positions (of the REG 2b) adjacent each other are sent to one of the sixteen HAs for performing the half addition of the two bit-signals. For example, the bit signals +R3-0 and +R3-1 set in the bit position 0 and 1, adjacent to each other, in the REG 2b are sent to an HA 12-0 in the CSA(3′) 12. In each HA, a half sum (HS) signal and a half carry (HC) signal are produced, so that 16 pairs of HS and HC signals are output from the CSA(3′) 12 and sent to the SEL(2) 41b and the SEL(1) 41a respectively. For example, a pair of signals +HS00 and +HC00 is output from the HA 12-0 and sent to the SEL(2) 41b and the SEL(1) 41a respectively as shown in Fig. 5.
All 65 decoded signals +G1-POS1, +G1-NEG1, +G1-POS2, +G1-NEG2, ---, +G16-POS2, +G16-NEG2 and +G17-POS1 output from the DCDR 3 are set to bit "0", in the population counting mode. Accordingly, in the population counting mode, the input signals to the MG 4 are all set to bit "0", so that the output signals from the MG 4 also become bit "0" as seen from Figs. 6 and 7. Fig. 6 is a block diagram illustrating the wiring connection between the MG 4 and the SEL 41a, whilst Fig. 7 illustrates wiring connection between the MG 4 and the SEL 41b. In Fig. 7, the same reference symbol or number as in Figs. 5 or 6 designates the same unit or signal as in Figs. 5 or 6. As shown in Figs. 6 and 7, the output signals +G2-30, +G3-30, ----, +G16-30 and +G17-30 from the MG 4 are sent to the SEL(1) 41a, the output signal +G2-31, +G3-31, ----, +G16-31 and G17-31 from the MG 4 are sent to the SEL(2), and the other output signals from the MG 4 are directly sent to the CSA(1′); wherein the numbers 30 and 31 indicate the bit positions, which will be explained later with reference to Fig. 8, in the CSA(1′). The output signals, each having the number 30, from the MG 4 are suppressed by AND circuits in the SEL(1) 41a in the population counting mode, so that only the output signals +HC-00, +HC-01, -----, +HC-14 and +HC-15 from the CSA(3′) 12 are output from the SEL(1) 41a as the input signals +G2-30-S, +G3-30-S, -----, +G16-30-S and +G17-30-S to the CSA(1′) 5. In the same way, the output signals, each having the number 31, from the MG 4 are suppressed by AND circuits in the SEL(2) 41b in the population counting mode, so that only the output signals +HS-00, +HS01, ----, +HS14 and +HS-15 from the CSA(3′) 12 are output from the SEL(2) 41b as the input signals +G2-31-S, +G3-31-S, -----, +G16-31-S and +G17-31-S to the CSA(1′) 5.

Meanwhile, in the regular multiplication mode, the output signals from the CSA(3′) 12 are suppressed at the SEL(1) and the SEL(2), and the output signals from the MG 4 are sent to the CSA(1′) directly and through the SEL(1) 41a and the SEL(2) 41b as seen from Figs. 5, 6 and 7.

Again in the population counting mode, the signals relating to the HS and HC signals of the IU data are input to the CSA(1′) 5 in which the input signals each having the number 30, for example +G2-30-S, and the number 31, for example +G2-31-S, are set at a definite bit position of sixteen bit rows described in Fig. 8.

Fig. 8 is a chart showing schematically a way of addition used for the multiplication in the CSA(1′). The chart corresponds a partial product of 4 byte x 4 byte performed in the regular multiplication mode. A numeral of 32 bits is set in each row, which will be called "bit row" hereinafter, in the regular multiplication mode; however, in the population counting mode, bits "0" are imposed at all positions except the hatched positions because the all input signals to the CSA(1′) 5 from the MG 4 are set to bit "0" in the population counting mode as stated before.

For example, the input carry signal +G2-30-s to the CSA(1′) 5 is set in the bit low G2 at a bit position corresponding to the 30th bit-position in a 64-bit carry numeral line depicted at the bottom in Fig. 8; the input sum signal +G2-31-s to the CSA(1′) 5, related to the carry signal +G2-30-s, is set in the bit low G2 at a bit position corresponding to the 31st bit position in the 64-bit numeral line depicted above; the input carry signal +G3-30-s to the CSA(1′) 5 is set in the bit low G3 at a bit position corresponding to the 30th position in the 64-bit numeral line; the input sum signal +G3-31-s to the CSA(1′) 5 is set in the bit low G3 at the 31st bit position in the 64-bit numeral line; and so on.

Accordingly, the carry and sum data respectively set at the 30th and 31st position of each bit row are vertically lined up. As seen from Fig. 8, G1 bit rows are not used in the population counting mode.

The bit numerals of the sum and carry set in the G2 to G17 bit rows are added in the CSA(1′) 5 and CPA(1′) 6. The added result is set at the 26th to 31st bit position, which are hatched, in the 64-bit numeral line at the bottom of the chart. The result represents the bit numeral of "1" bits in the 4-byte IU data set in the REG 2b in the sub-unit A. The result is sent to the REG 7a.

Since the input 8-byte data set in the REG 1b is equally divided into two elements, two sub-units are enough to perform the population counting. Therefore, in this embodiment, the sub-units A and B are used in both modes, the population counting mode and the regular multiplication mode, and other sub-units C and D are used only in the regular multiplication mode. Accordingly, the hardware and the function of the sub-unit B is the same as those of the sub-unit A, and the hardware and the function for the sub-units C and D are different from those for the sub-units A and B.

The sub-units C and D have the same function and the hardware each other, except the multiplicand and the multiplier in the sub-units are different. The sub-unit C has the function of performing the regular multiplication by multiplying the CU data and the IU data in the regular multiplication mode and producing all bits "0" in the population counting mode. Therefore, the sub-unit C has the hardware such as a REG 2e having the same function as the REG 2a in the sub-unit A, but no CSA(3′) such as the CSA(3′) 12 in the sub-unit A and no SEL such as the SEL 41 in the sub-unit A. As mentioned above, since the REG 2e has the same function as the REG 2a in the sub-unit A, from the REG 2e, the regular CU data are output in the regular multiplication mode and all bit "0" signals are output so that all bit "0" signals are output from a REG 7c to the CSA(2′) in the population counting mode. The block diagram for the sub-unit C is depicted in Fig. 4. Since the block diagram for the sub-unit D is equal to that for the sub-unit C, the sub-unit D block diagram is omitted to be depicted in Fig. 4.

In the sub-unit B, the added result is set at the 26th to 31st bit position, which are hatched, in the 64-bit numeral line at the bottom of the chart in the population counting mode. Wherein, the IL data is sent to an REG 2d in the sub-unit B from the REG 1b as seen from FIG. 4.

The two results output from sub-units A and B are added by the CSA(2′) 8 as shown in Fig. 4. The output of the CSA(2′) 8 is sent to the CPA(2′) 9 and added therein. The results of the CPA-(2′) 9 is post-shifted by the post shifter 10 and set in the REG 11, setting the result data to the positions for the upper 8 byte.

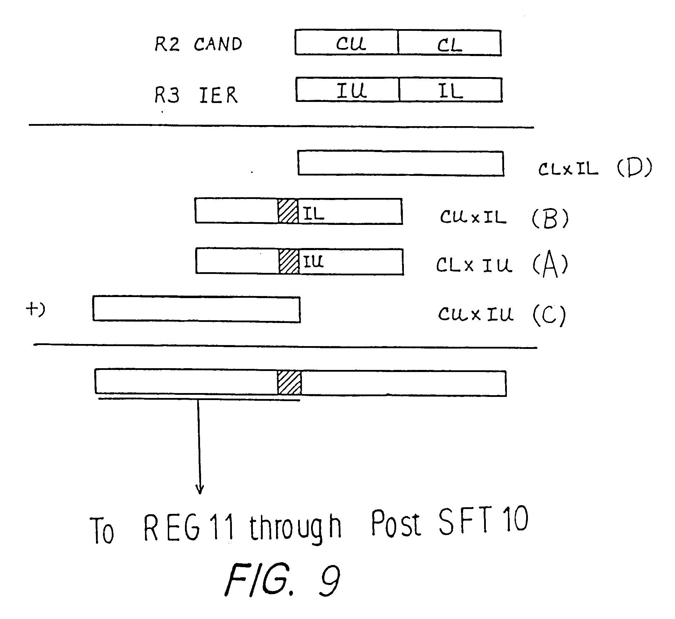

Fig. 9 illustrates the adding way of the operating results of the four sub-units A, B, C and D, performed by the CSA(2′) 8 and the CPA(2′) 9. A symbol "R2 CAND" indicates the multiplicand consisting of the CU data and the CL data set to the REG(R2) 1a, and a symbol "R3 IER" indicates the multiplier consisting of the IU data and the IL data set in the REG(R3) 1b. In the regular multiplication mode, the addition of the partial products CLxIL, CUxIL, CLxIU and CUxIU are performed by the CSA(2′) 8 and the CPA(2′) 9 as shown in Fig. 9. Wherein, the partial products CLxIL, CUxIL, CLxIU and CUxIU are obtained from sub-units D, B, A and C respectively. However, in the population counting mode, the partial products are obtained only from the sub-units A and B and furthermore the bit "1" results of the IU data, obtained by the sub-unit A, and those of the IL data, obtained by the sub-unit B are both in the same bit position as depicted by the hatched portions in Fig. 9. Therefore, the result of the addition can be obtained by simply adding the hatched portion indicated by IL and IU, using the CSA(2′) 8 and the CPA(2′) 9 as in the regular multiplication mode. The data included in the upper 8-byte positions are sent to the REG 11 through the post SFT 10.

The execution of the population counting instruction is summarized as follows:
1) the input 8-byte data for the population counting is set in the REG 1b from the VR 1.
2) the upper 4-byte data (IU data) of the input 8-byte data set in the REG 1b are set in the REG 2b of the sub-unit A, and the lower 4-byte data (IL data) of the input 8-byte data in the REG 1b are set in the REG 2d of the sub-unit B;
3) the divided 4 byte (32 bits) data (IU and IL data) are further divided into 16 pairs of two bits and 16-bit sum and carry are obtained by 16 half adders, suppressing the route from the REG 2b to the DCDR 3;
4) the output of the half adders is input to the CSA(1′) 5 through the selector 41;
5) the number of "1" bits in the IU data is obtained by addition performed by CSA-(1′) 5 and CPA-(1′) 6 in the sub-unit A,
6) the number of "1" bits in the IL data is obtained, in the same way as in the sub-unit A, in the sub-unit B at the same time;
7) the number of "1" bits in the IU data and the number in the IL data are set in the REG 7a in the sub-unit A and the REG 7b in the sub-unit B; and
8) the data in the REGs 7a and 7b are added by CSA(2′) 8 and CPA(2′) 9, taking the weights of respective bits into account.

Next, the second embodiment of the present invention will be explained.

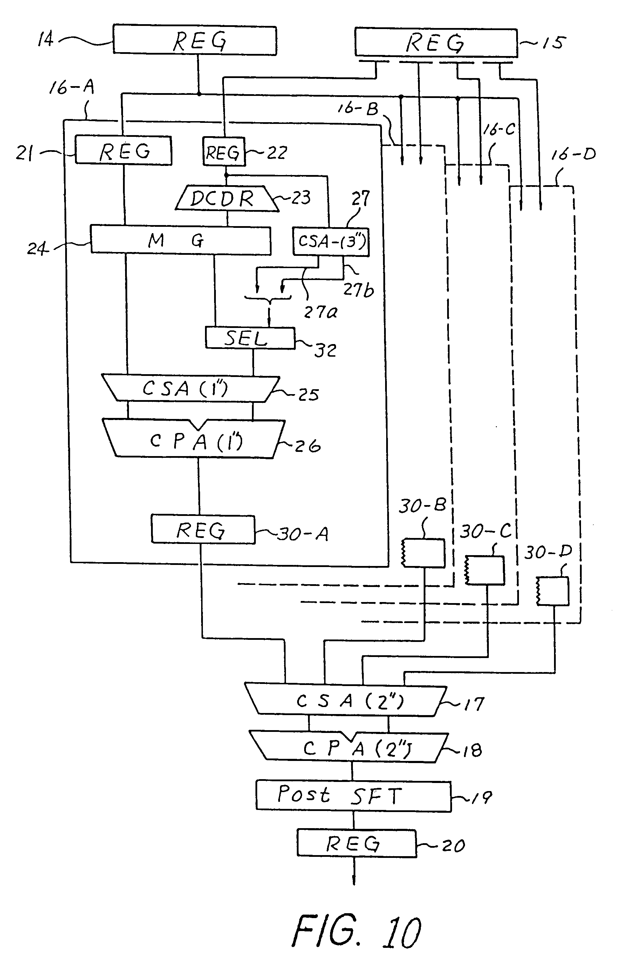

Fig. 10 shows a block diagram of a second multiplyng unit, as employed in the second embodiment of the present invention, which includes four multiplying sub-units 16-A, 16-B, 16-C and 16-D having the same constitution as each other and operating in accordance with a calculating form different from that in the case of the first embodiment. In Fig. 10, the multiplicand and the multiplier are stored in registers REGs 14 and 15 respectively, and the output of the four sub-units are added by a CSA 17 and a CPA 18 and sent to a register REG 20 through a post shifter SFT 19. Only the sub-unit 16-A will be explained because the sub-units 16-B, 16-C and 16-D are the same as the sub-unit 16-A as to their construction and function.

In the second embodiment, the 8-byte multiplier is divided into four 2-byte elements which are sent to the sub-units 16-A, 16-B, 16-C and 16-D respectively. The operation for multiplication and population counting in the sub-unit 16-A is essentially the same as in the sub-unit A of the first embodiment except the data set to the register REG 21 and to the register REG 22 is 8-byte and 2-byte data respectively.

In the population counting mode, an 8-byte multiplicand stored in the register REG 14 is sent to a register REG 21 in the sub-unit 16-A and to three other registers, having the same function as the REG 21, in the three sub-units 16-B, 16-C and 16-D respectively. Meanwhile, the 8-byte input data for population counting is stored in the REG 15 once instead of the 8-byte multiplier and equally divided into four elements each consisting of 2-byte data for population counting. Each 2-byte data is sent to a register REG 22 in the sub-unit 16-A and to three other registers, having the same function as REG 22, in the sub-units 16-B, 16-C and 16-D. The 2-byte data set in the REG 22 is sent to a third CSA (CSA(3˝)) 27. A half carry (HC) 27a and a half sum (HS) 27b output from the CSA (3˝) 27 are sent to a first CSA (CSA(1˝)) 25, having nine input terminals and four steps for addition, through a SEL 32. A sum and carry output from the CSA (1˝) 25 are added by a first CPA (CPA(1˝)) 26. The result of the addition from the CPA(1˝) is set in an REG 30-A.

The same operation as is in the sub-unit 16-A is executed respectively in the sub-units 16-B, 16-C and 16-D simultaneously. The four results obtained by the sub-units 16-A, 16-B, 16-C and 16-D are added by a second CSA (CSA(2˝)) 17 and a second CPA (CPA(2˝)) 18 to obtain a total result of the 8-byte input data. The output from the CPA(2˝) 18 is set in a register REG 20 through a post shifter 19.

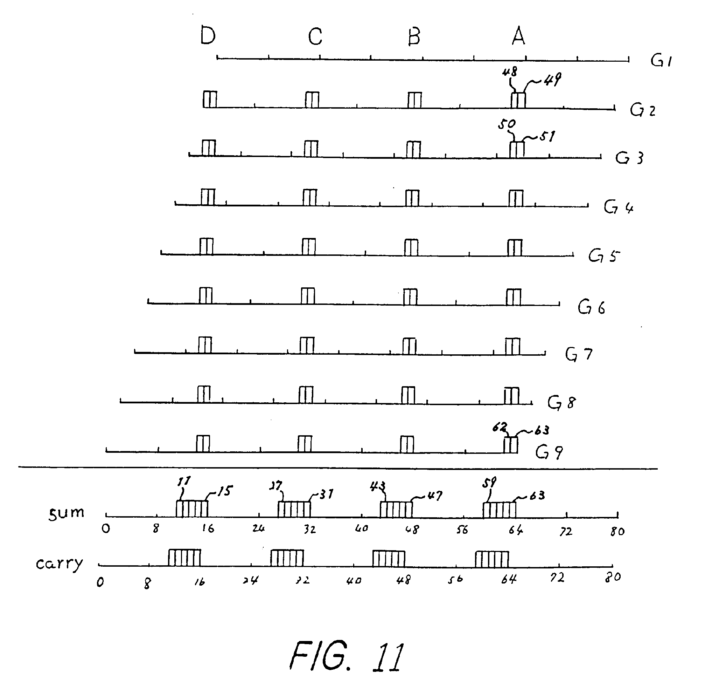

Fig. 11 shows schematically a way of addition in the CSA(1˝) 25 in the sub-unit 16-A to obtain the full sum and the fully carry. In the sub-unit 16-A, the bit signal of carry through a first selector which is a part of the SEL 32 and not depicted in Fig. 10 and the bit signal of sum through a second selector which is another part of the selector 32 are input to a terminal G2, which is not depicted, of the CSA(1˝) 25 and occupy the 48th and 49th bit positions of a 64-bit numeral row, respectively. The similar bit signals input to a terminal G3 of the CSA(1˝) 25 occupy the bit 50th and 51st bit positions and so on. Those input to a terminal G9 of the CSA(1˝) 25 occupy the 62nd and 63rd bit positions. In Fig. 11, the same addition in the sub-units 16-B, 16-C and 16-D are indicated together.

The results of addition of the carry and sum by the CSA(1˝) 25 are in the positions from 59th to 63rd, as shown at the bottom of the chart. In the same way, the position of the data of the carry and sum in the sub-units 16-B, 16-C and 16-D are from 43rd to 47th, from 27th to 31st and from 11th to 15th respectively, as shown at the bottom of the chart in Fig. 11. The full sum and full carry obtained in the CSA(1˝) 25 shown at the bottom, are added by the CPA (1˝) 26 to obtain the number of "1"s present in the first quarter part of the multiplier. Then, the data is set in the REG 30-A.

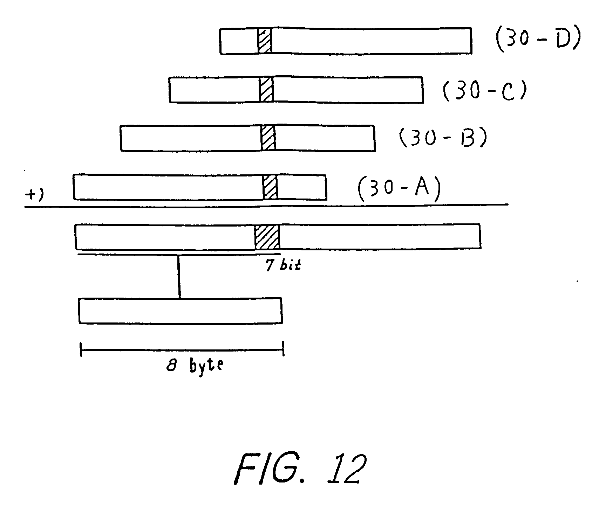

Fig. 12 shows schematically a way of addition in the CSA(2˝) 17, and CPA(2˝) 18 in order to obtain the total number of "1" bits present in the multiplier. Each data from the four REGs 30-A, 30-B, 30-C and 30-D are added as an addition of partial products. The data from the REGs 30-A, 30-B, 30-C and 30-D are 10 byte. The number of "1"s present in a quarter of the multiplier in the REG 15 is set in the hatched bits of each data. These four data are vertically lined up in four parallel rows shifted by 2 bytes as shown in Fig. 12. So, the resultant data is 16 byte. Discarding the lower 8 bytes, the upper half of the 16 bytes gives the 8-byte resultant data, in which the total number of "1" bits present in the multiplier is set in the last seven bits.

In an embodiment of the present invention population counting is performed by using a multiplying unit, in a computer system, including a plurality of multiplying sub-units for simultaneously executing partial multiplications among elements obtained by dividing multiplicand data and multiplier data in a regular multiplication mode. In a population counting mode, input data for the population counting is divided into population counting elements instead of the multiplier data and population countings for the elements are performed simultaneously by using the multiplying sub-units, producing partial counted data of the population counting elements, and the partial counted data are sent to a pair comprising a carry save adder and carry propagate adder by which a population counting result for the input data is obtained and output.

## Claims

1. A multiplying unit provided in a computer system, for performing multiplication of multiplicand data and multiplier data in a multiplication mode and for performing population counting of population counting input data in a population counting mode, the multiplying unit comprising:
means (1, 1a; 14) for registering the multiplicand data in the multiplication mode;
means (1, 1b; 15) for registering and equally dividing the multiplier data into a plurality of multiplier elements in the multiplication mode, and for registering and equally dividing the population counting data into a plurality of population counting elements, of the same number as the multiplier elements, in the population counting mode;
a plurality of multiplying sub-units (A, B, C, D; 16-A, 16-B, 16-C, 16-D) for executing simultaneously partial multiplications among the multiplicand and the multiplier elements, producing partial product data of the partial multiplications in the multiplication mode, and for executing simultaneously partial population countings for the population counting elements, producing partial counted data of the partial population countings in the population counting mode, of which multiplying sub-units (A, B, C, D; 16-A, 16-B, 16-C, 16-D) a plurality, equal in number to the population counting elements, comprise first type multiplying sub-units (A, B; 16-A, 16-B, 16-C, 16-D), each said first type multiplying sub-unit comprising:
a first sub-unit register (2b, 2d; 22) for setting one of the multiplier elements in the multiplication mode, and for setting one of the population counting elements in the population counting mode;
a second carry save adder (12; 27) for counting the number of "1" data bits in the population counting element registered in said first sub-unit register (2b, 2d; 22), simultaneously inputting every two data signals of the population counting element, said two data signals being what have been registered respectively in two registering positions adjacent each other, of said first sub-unit register (2b, 2d; 22), and outputting elemental sum and carry data of the population counting element;
a second sub-unit register (2a, 2c; 21) for setting and outputting the multiplicand data in the multiplication mode, and for generating and outputting all "0" data bits in the population counting mode;
a decoder (3; 23) for outputting decoded signals required for multiplying the multiplicand data and the multiplier element, inputting the multiplier element from said first sub-unit register (2b, 2d; 22) in the multiplication mode, and for generating and outputting all "0" data bits in the population counting mode;
a multiple generator (4; 24) for generating and outputting shifted data by combining the multiplicand data from said second sub-unit register (2a, 2c; 21) and the decoded signals from said decoder (3; 23) in the multiplication mode, and for generating and outputting all "0" data bits in the population counting mode;
a pair of a first carry save adder (5; 25) and a first carry propagate adder (6; 26) for outputting the partial product data of the partial multiplication of the multiplicand data and the multiplier element, adding the shifted data from said multiple generator (4; 24) in the multiplication mode, and for outputting the partial counted data of the number of "1" data bits in the population counting element, adding the elemental sum and carry data from said second carry save adder (12; 27) in the population counting mode; and
selector means (41; 32) for selecting the shifted data from said multiple generator (4; 24) and the elemental sum and carry data from said second carry save adder (12; 27) so as to send either of said data to said pair of a first carry save adder (5; 25) and a first carry propagate adder (6; 26) in accordance with the multiplication mode and the population counting mode respectively;
and the multiplying unit also comprising:
means (8, 9; 17, 18) for adding said partial product data from said multiplying sub-units (A, B, C, D; 16-A, 16-B, 16-C, 16-D), outputting a multiplication result of the multiplicand data and the multiplier data in the multiplication mode, and for adding said partial counted data of the partial population countings from said multiplying sub-units (A, B, C, D; 16-A, 16-B, 16-C, 16-D), outputting a population counting result of the population counting input data in the population counting mode.

2. A multiplying unit as claimed in claim 1, wherein said means (1, 1a) for registering the multiplicand data in the multiplication mode also equally divide the multiplicand data into a plurality of multiplicand elements in the multiplication mode, and said multiplying sub-units execute simultaneously partial multiplications among the multiplicand elements and the multiplier elements, producing partial product data of the partial multiplications in the multiplication mode, in each said first type multiplying sub-unit the second sub-unit register (2a, 2c) thus setting and outputting one of the multiplicand elements in the multiplication mode, the decoder (3) outputting decoded signals required for multiplying the multiplicand element and the multiplier element, the multiple generator (4) generating and outputting shifted data by combining the multiplicand element data from said second sub-unit register (2a, 2c; 21) and the decoded signals from the decoder (3; 23) in the multiplication mode, and the pair of the first carry save adder (5) and the first carry propagate adder (6) outputting the partial product data of the partial multiplication of the multiplicand element data and the multiplier element, adding the shifted data from said multiple generator (4) in the multiplication mode.

3. A multiplying unit as claimed in claim 1 or 2, wherein, of the multiplying sub-units (A, B, C, D), a further plurality comprise second type multiplying sub-units (C, D), of a number obtained by subtracting the number of the first type multiplying sub-units (A, B) from a number required to perform the partial multiplication among the multiplicand, or multiplicand elements, and the multiplier elements, each said second type multiplying sub-unit comprising:
a third sub-unit register (2f, 2h) for setting and outputting one of the multiplier elements in the multiplication mode;
a fourth sub-unit register (2e, 2g) for setting and outputting the multiplicand data, or one of the multiplicand elements, in the multiplication mode, and for generating and outputting all "0" data bits in the population counting mode; and
a decoder (3) for outputting decoded signals required for multiplying the multiplicand data, or the multiplicand element, and the multiplier element, inputting the multiplier element from said third sub-unit register in the multiplication mode, and for generating and outputting all "0" data bits in the population counting mode.

## Patentansprüche

1. Eine Multipliziereinheit, die in einem Computersystem vorgesehen ist, zum Ausführen einer Multiplikation von Multiplikandendaten und Multiplikatordaten in einem Multiplikationsmodus und zum Ausführen eines Populationszählens von Populationszähleingangsdaten in einem Populationszählmodus, welche Multipliziereinheit umfaßt:
ein Mittel (1, 1a; 14) zum Registrieren der Multiplikandendaten im Multiplikationsmodus;
ein Mittel (1, 1b; 15) zum Registrieren und gleichmäßigen Teilen der Multiplikatordaten in eine Vielzahl von Multiplikatorelementen im Multiplikationsmodus, und zum Registrieren und gleichmäßigen Teilen der Populationszähldaten in eine Vielzahl von Populationszählelementen mit derselben Anzahl wie die Multiplikatorelemente im Populationszählmodus;
eine Vielzahl von Multiplizieruntereinheiten (A, B, C, D; 16-A, 16-B, 16-C, 16-D) zum Ausführen von gleichzeitigen Teilmultiplikationen zwischen dem Multiplikanden und den Multiplikatorelementen im Multiplikationsmodus, wobei Teilproduktdaten der Teilmultiplikationen erzeugt werden, und zum Ausführen von gleichzeitigen Teilpopulationszählungen bei den Populationszählelementen im Populationszählmodus, wobei Teilzähldaten der Teilpopulationszählungen erzeugt werden, von welchen Multiplizieruntereinheiten (A, B, C, D; 16-A, 16-B, 16-C, 16-D) eine Vielzahl, die in der Anzahl den Populationszählelementen gleich ist, Multiplizieruntereinheiten des ersten Typs (A, B; 16-A, 16-B, 16-C, 16-D) umfaßt, von welchen Multiplizieruntereinheiten des ersten Typs jede umfaßt:
ein erstes Untereinheitsregister (2b, 2d; 22) zum Setzen eines der Multiplikatorelemente im Multiplikationsmodus, und zum Setzen eines der Populationszählelemente im Populationszählmodus;
einen zweiten Übertragssicherungsaddierer (12; 27) zum Zählen der Anzahl von "1"-Datenbits in dem Populationszählelement, das in dem genannten ersten Untereinheitsregister (2b, 2d; 22) registriert ist, wobei immer zwei Datensignale des Populationszählelementes gleichzeitig eingegeben werden, welche zwei Datensignale die sind, die jeweilig an zwei Registrierpositionen des genannten ersten Untereinheitsregisters (2b, 2d; 22), die aneinandergrenzen, registriert worden sind, und elementare Summen- und Übertragsdaten des Populationszählelementes ausgegeben werden;
ein zweites Untereinheitsregister (2a, 2c; 21) zum Setzen und Ausgeben der Multiplikandendaten im Multiplikationsmodus, und zum Erzeugen und Ausgeben von lauter "0"-Datenbits im Populationszählmodus;
einen Dekodierer (3; 23) zum Ausgeben von dekodierten Signalen, die zum Multiplizieren der Multiplikandendaten und des Multiplikatorelementes erforderlich sind, im Multiplikationsmodus, wobei das Multiplikatorelement von dem genannten ersten Untereinheitsregister (2b, 2d; 22) eingegeben wird, und zum Erzeugen und Ausgeben von lauter "0"-Datenbits im Populationszählmodus;
einen Vielfachgenerator (4; 24) zum Erzeugen und Ausgeben von verschobenen Daten durch Kombinieren der Multiplikandendaten von dem genannten zweiten Untereinheitsregister (2a, 2c; 21) und der dekodierten Signale von dem genannten Dekodierer (3; 23) im Multiplikationsmodus, und zum Erzeugen und Ausgeben von lauter "0"-Datenbits im Populationszählmodus;
ein Paar eines ersten Übertragssicherungsaddierers (5; 25) und eines ersten Übertragspropagationsaddierers (6; 26) zum Ausgeben der Teilproduktdaten der Teilmultiplikation der Multiplikandendaten und des Multiplikatorelementes im Multiplikationsmodus, wobei die verschobenen Daten von dem genannten Vielfachgenerator (4; 24) addiert werden, und zum Ausgeben der Teilzähldaten der Anzahl von "1"-Datenbits im Populationszählelement im Populationszählmodus, wobei die elementaren Summen- und Übertragsdaten von dem genannten zweiten Übertragssicherungsaddierer (12; 27) addiert werden; und
ein Selektormittel (41; 32) zum Selektieren der verschobenen Daten von dem genannten Vielfachgenerator (4; 24) und der elementaren Summen- und Übertragsdaten von dem genannten zweiten Übertragssicherungsaddierer (12; 27), um gemäß dem Multiplikationsmodus bzw. Populationszählmodus eine Menge der genannten Daten zu dem genannten Paar eines ersten Übertragssicherungsaddierers (5; 25) und eines ersten Übertragspropagationsaddierers (6; 26) zu senden;
und welche Multipliziereinheit auch umfaßt:
ein Mittel (8, 9; 17, 18) zum Addieren der genannten Teilproduktdaten von den genannten Multiplizieruntereinheiten (A, B, C, D; 16-A, 16-B, 16-C, 16-D) im Multiplikationsmodus, wobei ein Multiplikationsresultat der Multiplikandendaten und der Multiplikatordaten ausgegeben wird, und zum Addieren der genannten Teilzähldaten der Teilpopulationszählungen von den genannten Multiplizieruntereinheiten (A, B, C, D; 16-A, 16-B, 16-C, 16-D) im Populationszählmodus, wobei ein Populationszählresultat der Populationszähleingangsdaten ausgegeben wird.

2. Eine Multipliziereinheit nach Anspruch 1, bei der das genannte Mittel (1, 1a) zum Registrieren der Multiplikandendaten im Multiplikationsmodus auch die Multiplikandendaten im Multiplikationsmodus gleichmäßig in eine Vielzahl von Multiplikandenelementen teilt, und die genannten Multiplizieruntereinheiten im Multiplikationsmodus Teilmultiplikationen zwischen den Multiplikandenelementen und den Multiplikatorelementen gleichzeitig ausführen, wobei Teilproduktdaten der Teilmultiplikationen erzeugt werden, in jeder genannten Multiplizieruntereinheit des ersten Typs das zweite Untereinheitsregister (2a, 2c) somit im Multiplikationsmodus eines der Multiplikandenelemente setzt und ausgibt, der Dekodierer (3) dekodierte Signale ausgibt, die zum Multiplizieren des Multiplikandenelementes und des Multiplikatorelementes erforderlich sind, der Vielfachgenerator (4) im Multiplikationsmodus verschobene Daten erzeugt und ausgibt, indem die Multiplikandenelementdaten von dem genannten zweiten Untereinheitsregister (2a, 2c; 21) und die dekodierten Signale von dem Dekodierer (3; 23) kombiniert werden, und das Paar des ersten Übertragssicherungsaddierers (5) und des ersten Übertragspropagationsaddierers (6) im Multiplikationsmodus die Teilproduktdaten der Teilmultiplikation der Multiplikandenelementdaten und des Multiplikatorelementes ausgibt, wobei die verschobenen Daten von dem genannten Vielfachgenerator (4) addiert werden.

3. Eine Multipliziereinheit nach Anspruch 1 oder 2, bei der von den Multiplizieruntereinheiten (A, B, C, D) eine weitere Vielzahl Multiplizieruntereinheiten des zweiten Typs (C, D) in einer Anzahl umfaßt, die erhalten wird, indem die Anzahl der Multiplizieruntereinheiten des ersten Typs (A, B) von einer Anzahl subtrahiert wird, die erforderlich ist, um die Teilmultiplikation zwischen dem Multiplikanden, oder den Multiplikandenelementen, und den Multiplikatorelementen auszuführen, von welchen Multiplizieruntereinheiten des zweiten Typs jede umfaßt:
ein drittes Untereinheitsregister (2f, 2h) zum Setzen und Ausgeben eines der Multiplikatorelemente im Multiplikationsmodus;
ein viertes Untereinheitsregister (2e, 2g) zum Setzen und Ausgeben der Multiplikandendaten, oder eines der Multiplikandenelemente, im Multiplikationsmodus, und zum Erzeugen und Ausgeben von lauter "0"-Datenbits im Populationszählmodus; und
einen Dekodierer (3) zum Ausgeben von dekodierten Signalen im Multiplikationsmodus, die zum Multiplizieren der Multiplikandendaten, oder des Multiplikandenelementes, und des Multiplikatorelementes erforderlich sind, wobei das Multiplikatorelement von dem genannten dritten Untereinheitsregister eingegeben wird, und zum Erzeugen und Ausgeben von lauter "0"-Datenbits im Populationszählmodus.

## Revendications

1. Unité de multiplication d'un système de traitement de l'information, pour effectuer une multiplication de données de multiplicande et de données de multiplicateur dans un mode de multiplication et pour effectuer un comptage de population de données d'entrée de comptage de population dans un mode de comptage de population, l'unité de multiplication étant caractérisée en ce qu'elle comprend :
un moyen (1, 1a ; 14) pour enregistrer les données de multiplicande dans le mode de multiplication ;
un moyen (1, 1b ; 15) pour enregistrer et diviser également les données de multiplicateur en une pluralité d'éléments multiplicateurs dans le mode de multiplication, et pour enregistrer et diviser également les données de comptage de population en une pluralité d'éléments de comptage de population, en nombre égal à celui des éléments multiplicateurs, dans le mode de comptage de population ;
une pluralité de sous-unités de multiplication (A, B, C, D ; 16-A, 16-B, 16-C, 16-D) pour exécuter simultanément des multiplications partielles entre le multiplicande et les éléments multiplicateurs, en produisant des données de produit partiel des multiplications partielles dans le mode de multiplication, et pour exécuter simultanément des comptages de population partiels pour les éléments de comptage de population, en produisant des données comptées partielles des comptages de population partiels dans le mode de comptage de population, dont une pluralité des sous-unités de multiplication (A, B, C, D ; 16-A, 16-B, 16-C, 16-D), égale en nombre à celui des éléments de comptage de population, comprend des sous-unités de multiplication d'un premier type (A, B ; 16-A, 16-B, 16-C, 16-D), chaque dite sous-unité de multiplication du premier type comprenant :
un premier registre de sous-unité (2b, 2d ; 22) pour établir un des éléments multiplicateurs dans le mode de multiplication, et pour établir un des éléments de comptage de population dans le mode de comptage de population ;
un deuxième additionneur à sauvegarde de report (12 ; 27) pour compter le nombre de bits de données à "1" dans l'élément de comptage de population enregistré dans ledit premier registre de sous-unité (2b, 2d ; 22), en entrant simultanément chaque paire de signaux de données de l'élément de comptage de population, ladite paire de signaux de données étant ce qui a été enregistré respectivement à deux positions d'enregistrement voisines l'une de l'autre dudit premier registre de sous-unité (2b, 2d ; 22), et en sortant des données de somme et de report élémentaires de l'élément de comptage de population ;
un deuxième registre de sous-unité (2a, 2c ; 21) pour établir et sortir les données de multiplicande dans le mode de multiplication, et pour engendrer et sortir tous les bits de données à "0" dans le mode de comptage de population ;
un décodeur (3 ; 23) pour sortir des signaux décodés nécessaires pour multiplier les données de multiplicande et l'élément multiplicateur, en entrant l'élément multiplicateur dudit premier registre de sous-unité (2b, 2d ; 22) dans le mode de multiplication, et pour générer et sortir tous les bits de données à "0" dans le mode de comptage de population ;
un générateur multiple (4 ; 24) pour générer et sortir des données décalées en combinant les données de multiplicande provenant dudit deuxième registre de sous-unité (2a, 2c ; 21) et les signaux décodés dudit décodeur (3 ; 23) dans le mode de multiplication, et pour générer et sortir tous les bits de données à "0" dans le mode de comptage de population ;
une paire d'un premier additionneur à sauvegarde de report (5 ; 25) et d'un premier additionneur à propagation de report (6 ; 26) pour sortir les données de produit partiel de la multiplication partielle des données de multiplicande et de l'élément multiplicateur, en additionnant les données décalées provenant dudit générateur multiple (4 ; 24) dans le mode de multiplication, et pour sortir les données comptées partielles du nombre de bits de données à "1" dans l'élément de comptage de population, en additionnant les données de somme et de report élémentaires provenant dudit deuxième additionneur à sauvegarde de report (12 ; 27) dans le mode de comptage de population ; et,
un moyen sélecteur (41 ; 32) pour sélectionner les données décalées dudit générateur multiple (4 ; 24) et les données de somme et de report élémentaires dudit deuxième additionneur à sauvegarde de report (12 ; 27) de manière à envoyer les unes ou les autres desdites données à ladite paire du premier additionneur à sauvegarde de report (5 ; 25) et du premier additionneur à propagation de report (6 ; 26) respectivement selon le mode de multiplication et le mode de comptage de population ;
et en ce que l'unité de multiplication comprend en outre :
un moyen (8, 9 17, 18) pour additionner lesdites données de produit partiel provenant desdites sous-unités de multiplication (A, B, C, D ; 16-A, 16-B, 16-C, 16-D), en sortant un résultat de multiplication des données de multiplicande et des données de multiplicateur dans le mode de multiplication, et pour additionner lesdites données comptées partielles des comptages de population partiels provenant desdites sous-unités de multiplication (A, B, C, D ; 16-A, 16-B, 16-C, 16-D), en sortant un résultat de comptage de population des données d'entrée de comptage de population dans le mode de comptage de population.

2. Unité de multiplication selon la revendication 1, caractérisée en ce que ledit moyen (1, 1a) pour enregistrer les données de multiplicande dans le mode de multiplication divise aussi également les données de multiplicande en une pluralité d'éléments multiplicandes dans le mode de multiplication, et lesdites sous-unités de multiplication exécutent simultanément des multiplications partielles entre les éléments multiplicandes et les éléments multiplicateurs, en produisant des données de produit partiel des multiplications partielles dans le mode de multiplication dans chaque dite sous-unité de multiplication du premier type, le deuxième registre de sous-unité (2a, 2c) établissant et sortant ainsi un des éléments multiplicandes dans le mode de multiplication, le décodeur (3) sortant les signaux décodés nécessaires pour multiplier l'élément multiplicande et l'élément multiplicateur, le générateur multiple (4) générant et sortant des données décalées en combinant les données d'élément multiplicande provenant dudit deuxième registre de sous-unité (2a, 2c ; 21) et les signaux décodés du décodeur (3 ; 23) dans le mode de multiplication, et la paire du premier additionneur à sauvegarde de report (5) et du premier additionneur à propagation de report (6) sortant les données de produit partiel de la multiplication partielle des données de l'élément multiplicande et de l'élément multiplicateur, en additionnant les données décalées provenant dudit générateur multiple (4) dans le mode de multiplication.

3. Unité de multiplication selon l'une quelconque des revendications 1 et 2 caractérisée en ce que, parmi les sous-unités de multiplication (A, B, C, D), une autre pluralité comprend des sous-unités de multiplication d'un second type (C, D) dont le nombre est obtenu en soustrayant le nombre des sous-unités de multiplication du premier type (A, B) du nombre nécessaire pour exécuter la multiplication partielle entre le multiplicande, ou les éléments multiplicandes, et les éléments multiplicateurs, chaque dite sous-unité de multiplication du second type comprenant :
un troisième registre de sous-unité (2f, 2h) pour établir et sortir un des éléments multiplicateurs dans le mode de multiplication ;
un quatrième registre de sous-unité (2e, 2g) pour établir et sortir les données de multiplicande, ou un des éléments multiplicandes, dans le mode de multiplication, et pour générer et sortir tous les bits de données à "0" dans le mode de comptage de population ; et,
un décodeur (3) pour sortir les signaux décodés nécessaires pour multiplier les données de multiplicande, ou l'élément multiplicande, et l'élément multiplicateur, en entrant l'élément multiplicateur provenant dudit troisième registre de sous-unité dans le mode de multiplication, et pour générer et sortir tous les bits de données à "0" dans le mode de comptage de population.
